# EUROPÄISCHE PATENTANMELDUNG

(11) **EP 2 551 552 A1**
(43) Veröffentlichungstag der Anmeldung: **30.01.2013**
(21) Anmeldenummer: 12172020.5
(22) Anmeldetag: 14.06.2012
(51) Int. Cl.: F16H 57/08

(54) **Getriebeanordnung**

(30) Priorität: 29.07.2011 DE 102011080080
(71) Anmelder: ZF Friedrichshafen AG, 88038 Friedrichshafen (DE)
(72) Erfinder: Muro, Giuseppe, 88045 Friedrichshafen (DE); Müller, Josef, 88682 Salem-Mimmenhausen (DE)

(57) **Zusammenfassung**

Die Erfindung betrifft eine Getriebeanordnung, umfassend ein Planetengetriebe (2) mit einem jeweils ein Ende der Planetenradbolzen (20) haltenden Planetenträger (6), einem das jeweils andere Ende der Planetenradbolzen (20) haltenden Bolzenträger (8), und mit einem mit der aus Planetenträger (6) und Bolzenträger (8) gebildeten Baugruppe verbundenen Lamellenträger (10) für eine dem Planetengetriebe zugeordnete Schaltkupplung. Um die Anzahl der Bauteile gering und die Montage einfach zu halten, bilden der Planetenträger (6), der Bolzenträger (8) und der Lamellenträger (10) jeweils ein eigenständiges Bauteil, die über einen gemeinsamen Satz Schraubbolzen (36) oder dergleichen miteinander verbunden sind, welche jeweils in radial äußeren Peripheriebereichen dieser drei Bauteile (6, 8, 10) ausgebildete, zueinander fluchtende Bohrungen (30, 32, 34) durchsetzen. Die in den Peripheriebereichen angeordneten Schraubbolzen (36) sind jederzeit für eine Demontage leicht zugänglich.

## Beschreibung

Die Erfindung betrifft eine Getriebeanordnung, umfassend ein Planetengetriebe mit einem jeweils ein Ende der Planetenradbolzen haltenden Planetenträger, einem das jeweils andere Ende der Planetenradbolzen haltenden Bolzenträger, und mit einem mit der aus Planetenträger und Bolzenträger gebildeten Baugruppe verbundenen Lamellenträger für eine dem Planetengetriebe zugeordnete Schaltkupplung.

Es sind unterschiedliche Konstruktionen bekannt, bei denen mit der aus Planetenträger und Bolzenträger gebildeten Baugruppe ein oder mehrere Funktionselemente verbunden sind, die von dieser zu einer Drehung mitgenommen werden. Bei einer bekannten Konstruktion ist der Planetenträger einerseits mit einer dem Planetenradträger zugeordneten Nabe und andererseits mit dem Bolzenträger verschweißt. Der Lamellenträger ist mit dem Planetenträger verschraubt. Mit dem Bolzenträger ist über eine weitere Schraubverbindung eine Mitnehmerscheibe verbunden, in deren radial inneren Bereich eine Mitnehmernabe angeordnet und mit dieser verschweißt ist, über die ein weiteres Funktionselement, beispielsweise eine Schmierölpumpe angetrieben werden kann. Diese Konstruktion mit ihren drei Schweißstellen und zwei Verschraubungen ist fertigungstechnisch aufwendig und in der Herstellung vergleichsweise teuer.

Aus der DE 10 2007 042 714 A1 ist ein Planetenradsatz der im Oberbegriff des Anspruchs 1 genannten Art bekannt, bei welchem der Planetenradträger und eine dem Planetenradträger zugeordnete Nabe einerseits sowie der Bolzenträger (die dortige Führungsscheibe 8) und der Lamellenträger andererseits jeweils einstückig ausgebildet sind, um die Anzahl der Bauteile und der nötigen Verbindungen zu verringern. Die Verbindung zwischen dem ein Ende der Planetenradbolzen haltenden Planetenträger und dem das jeweils andere Ende haltenden Bolzenträger erfolgt in konstruktiv aufwendiger Weise über die hohlen Planetenradbolzen durchsetzende Schrauben, die nach der Montage des für die Betätigung der Lamellenkupplung vorgesehenen Ringzylinders mit Ringkolben und Tellerfeder nicht mehr zugänglich sind, so dass eine Demontage beispielsweise für den Fall einer notwendigen Reparatur recht aufwendig ist.

Außerdem ist der Bolzenträger mit dem integrierten Lamellenträger speziell für eine Anordnung ausgelegt, bei der dem Planetengetriebe eine Schaltkupplung direkt zugeordnet ist. Für die damit erreichte Verringerung der Bauteile muss jedoch in Kauf genommen werden, dass für Anordnungen ohne Schaltkupplung ein entsprechend anders gestalteter Bolzenträger vorrätig gehalten werden muss.

Der Erfindung liegt die Aufgabe zugrunde, eine Getriebeanordnung der im Oberbegriff des Anspruchs 1 genannten Art vorzuschlagen, die konstruktiv und montagetechnisch einfach ist, und bei der möglichst wenige, auch für unterschiedliche Bauvarianten verwendbare Bauteile zum Einsatz kommen.

Der Erfindung liegt die Erkenntnis zugrunde, dass aus Gründen einer universellen Verwendbarkeit der Bolzenträger und der Lamellenträger zwar eigenständige Bauteile sein sollten, dass jedoch der Lamellenträger ohne gesonderte Befestigungsmittel mit dem Planetengetriebe und die die Getriebeanordnung bildenden Bauteile möglichst mit einem gemeinsamen Schraubensatz miteinander verbunden sein sollten.

Die Erfindung geht daher aus von einer Getriebeanordnung, umfassend ein Planetengetriebe mit einem jeweils ein Ende der Planetenradbolzen haltenden Planetenträger, einem das jeweils andere Ende der Planetenradbolzen haltenden Bolzenträger, und mit einem mit der aus Planetenträger und Bolzenträger gebildeten Baugruppe verbundenen Lamellenträger für eine dem Planetengetriebe zugeordnete Schaltkupplung. Dabei ist gemäß der Erfindung vorgesehen, dass der Planetenträger, der Bolzenträger und der Lamellenträger jeweils eigenständige Bauteile bilden, und dass diese über einen einzigen Satz Schraubbolzen oder dergleichen miteinander verbunden sind, welche jeweils in Peripheriebereichen dieser drei Bauteile ausgebildete, zueinander fluchtende Bohrungen durchsetzen.

Durch diesen Aufbau wird erreicht, dass obwohl der Bolzenträger als auch der Lamellenträger eigenständige Bauteile sind, und dass für die Verbindung der genannten drei Bauteile nur ein einziger gemeinsamer Schraubensatz verwendet werden muss.

Zudem bleiben die Peripheriebereiche dieser Bauteile auch nach Einbau einer innerhalb des Lamellenträgers angeordneten Betätigungseinrichtung für die Schaltkupplung zugänglich, so dass sowohl die Montage als auch eine gegebenenfalls erforderliche Demontage leicht durchführbar ist.

Gemäß einer bevorzugten Ausgestaltung der Erfindung ist vorgesehen, dass der Lamellenträger an dem Planetenträger derart angeordnet ist, dass der Lamellenträger eine Nabe des Planetenträgers konzentrisch umgibt. Auf diese Weise ergibt sich ein äußerst kompakter Aufbau, da die axialen Längsabmessungen der Getriebeanordnung durch den Lamellenträger nicht oder nicht wesentlich vergrößert werden. Die Anordnung des Lamellenträgers an dem Planetenträger erfolgt vorzugsweise an einer Antriebsseite des Planetenträgers.

Die vorgeschlagene Anordnung bietet darüber hinaus die Möglichkeit des Antriebs eines weiteren Funktionselements, beispielsweise einer Schmierölpumpe. Für diesen Fall ist gemäß einer Weiterbildung der Erfindung vorgesehen, dass der Bolzenträger in seinem radial inneren Bereich eine zu einer Abtriebsseite hin ausgerichtete Nabe trägt, die mit dem weiteren Funktionselement antriebsverbunden werden kann.

Die Verbindung zwischen Bolzenträger und Nabe kann beliebig gestaltet sein. Um die Anzahl der Bauteile klein zu halten, bilden jedoch gemäß einer weiteren Ausgestaltung der Erfindung der Bolzenträger und die Nabe ein einstückiges Bauelement.

Gemäß einer weiteren Ausgestaltung der Erfindung ist die Nabe des Bolzenträgers als Hohlnabe ausgebildet. Auf diese Weise kann innerhalb der Hohlnabe beispielsweise eine Welle angeordnet sein, welche mit einem dem Planetengetriebe zugehörigen Sonnenrad drehfest in Verbindung stehen kann, wie anhand eines Ausführungsbeispiels noch erläutert wird.

Als Montagehilfe für das Zusammenfügen der genannten drei Bauteile, nämlich Planetenträger, Bolzenträger und Lamellenträger, ist gemäß der Erfindung vorgesehen, dass diese drei Bauteile durch jeweils zueinander fluchtende Passbohrungen durchsetzende Passstifte ausgerichtet werden, bevor sie verschraubt und damit fest miteinander verbunden werden.

Als Alternative zu der oben genannten Montagehilfe für das Zusammenfügen der genannten drei Bauteile, nämlich Planetenträger, Bolzenträger und Lamellenträger kann in einer weiteren Ausführungsform vorgesehen sein, dass zuerst der Planetenträger und der Bolzenträger durch jeweils zueinander fluchtende Passbohrungen durchsetzende Passstifte ausgerichtet werden und anschließend der Lamellenträger, welcher zum Planetenträger gesondert zentriert wird, gemeinsam mit dem Planetenträger und dem Bolzenträger verschraubt wird, wodurch die drei Bauteile fest miteinander verbunden werden.

Gemäß einer bevorzugten konstruktiven Ausgestaltung der Erfindung sind der Planetenträger einerseits und der Bolzenträger andererseits scheibenförmig ausgebildet, und sie liegen im radial äußeren Peripheriebereich an ihren einander zugewandten Innenseiten über an deren Umfang verteilt angeordnete Abstandsblöcke aneinander an, wobei die die Schraubbolzen aufnehmenden Bohrungen und die die Passstifte aufnehmenden Passbohrungen die Abstandsblöcke axial durchsetzen. Die Bohrungen für die Passstifte sind dabei radial unterhalb der Bohrungen für die Schraubbolzen angeordnet. Auf diese Weise wird zwischen Planetenträger und Bolzenträger der für die Aufnahme des Sonnenrades erforderliche Raum freigehalten. Zwischen zwei in Umfangsrichtung aufeinander folgende und aneinander anliegende Abstandsblockpaare sind jeweils Taschen zur Aufnahme der Planetenräder gebildet, wobei die Planetenräder über die äußere Peripherie des Planetenträgers bzw. Bolzenträgers hinausragen und mit ihren Außenverzahnungen in ein innenverzahntes Hohlrad eingreifen.

Die Erfindung wird nachfolgend anhand der beiliegenden Zeichnung an einer Ausführungsform weiter erläutert. Darin zeigt
Fig. 1 eine Getriebeanordnung mit einem teilweise dargestellten Planetengetriebe und einem axial äußeren Lamellenträger in einer perspektivischen Explosionsansicht,
Fig. 2 eine zusammengebaute Getriebeanordnung nach Fig. 1 in einem Längsschnitt gemäß der Schnittlinie II-II in Fig. 3, und
Fig. 3 die Getriebeanordnung gemäß Fig. 2 in einer Ansicht in Richtung des Pfeils 46.

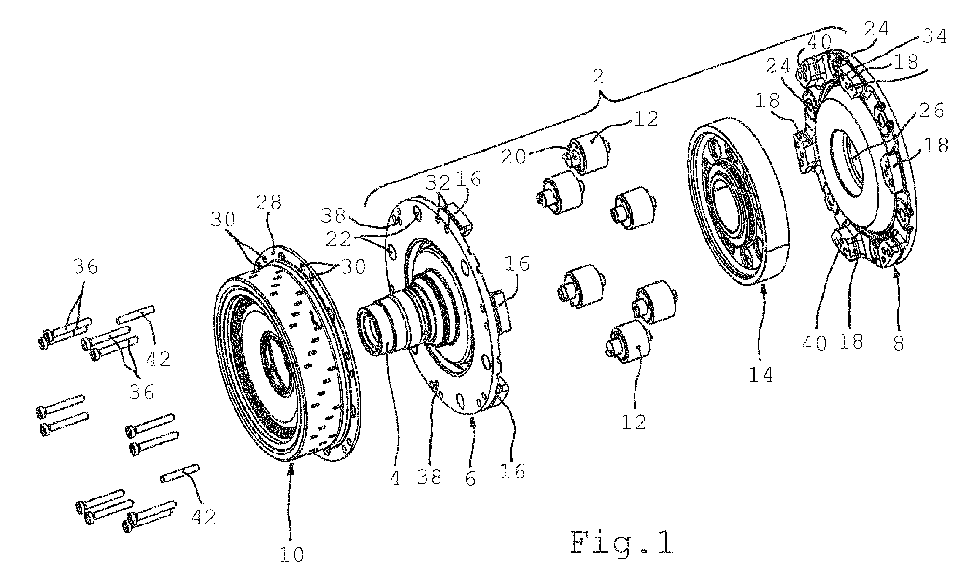

Die Getriebeanordnung gemäß der Fig. 1 umfasst ein als Ganzes mit 2 bezeichnetes Planetengetriebe mit einem Planetenträger 6, einem Bolzenträger 8 und einem mit dem Planetengetriebe 2 verbindbaren axial äußeren Lamellenträger 10 für eine dem Planetengetriebe 2 zugeordnete Schaltkupplung. Außerdem sind mehrere zwischen dem Planetenträger 6 und dem Bolzenträger 8 angeordnete Planetenräder 12 sowie ein mit den Planetenrädern 12 im Zahneingriff stehendes Sonnenrad 14 erkennbar. Ein mit den Planetenrädern 12 radial außen im Zahneingriff stehendes Hohlrad ist aus Gründen einer besseren Übersichtlichkeit nicht dargestellt.

Der Planetenträger 6 umfasst eine Nabe 4, über welche ein Drehmoment von dem Planetenträger 6 an ein weiterführendes Bauteil, beispielsweise eine Welle, übertragen werden kann. Der Planetenträger 6 ist beispielsweise über die dem Planetengetriebe 2 zugeordnete Schaltkupplung oder über das mit den Planetenrädern 12 im Zahneingriff stehende Hohlrad antreibbar. Auch ist ein kombinierter Antrieb des Planetenträgers 6 sowohl über die Schaltkupplung als auch über das Hohlrad möglich. Eine entsprechende Drehmomentabstützung erfolgt vorzugsweise über das Sonnenrad 14.

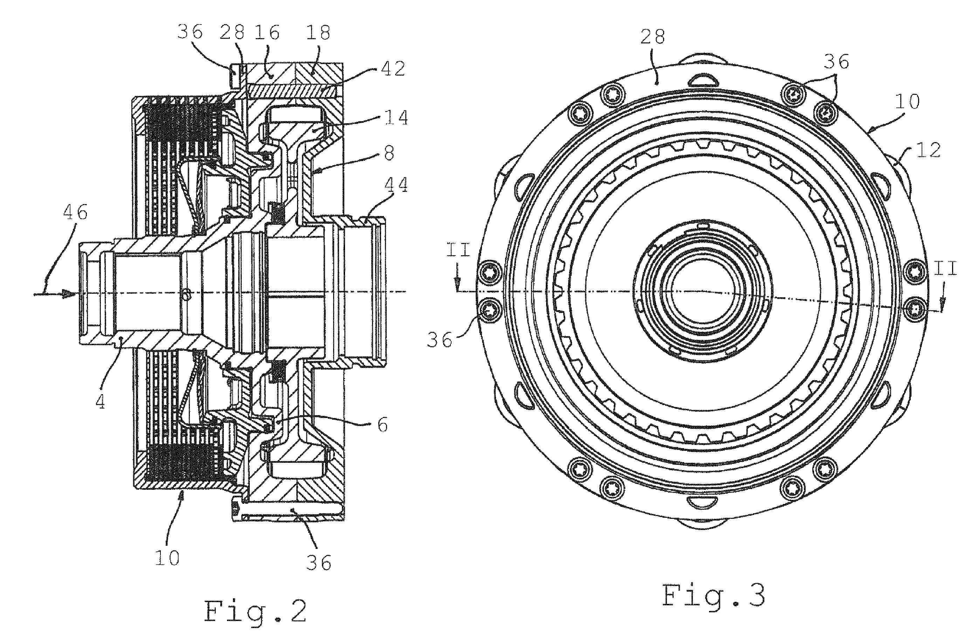

Wie insbesondere auch aus der Fig. 2 ersichtlich ist, sind der Planetenträger 6 und der Bolzenträger 8 im wesentlichen scheibenförmig ausgebildet, und sie weisen an ihren einander zugewandten Innenseiten im Peripheriebereich über den Umfang verteilt angeordnete Abstandsblöcke 16 bzw. 18 auf, die im montierten Zustand des Planetengetriebes aneinander anliegen und damit zwischen Planetenträger 6 und Bolzenträger 8 einen Zwischenraum schaffen, in welchem die Planetenräder 12 und das Sonnenrad 14 angeordnet sind. Es sei an dieser Stelle bemerkt, dass eine Außenverzahnung der Planetenräder 12 sowie eine Außenverzahnung des Sonnenrades 14 aus Gründen einer zeichnerischen Vereinfachung nicht dargestellt sind. Auch eine gegebenenfalls vorgesehene Innenverzahnung des Sonnenrades 14 für eine drehfeste Verbindung mit beispielsweise einer Außenverzahnung einer gehäusefesten Hohlwelle ist nicht dargestellt.

Zur Montage der Getriebeanordnung werden die Planetenräder 12 mit den dazugehörigen Planetenradbolzen 20 jeweils in den Bolzenträger 8 eingesetzt, wobei jeweils das dem Bolzenträger 8 zugeordnete Ende des Planetenradbolzens 20 in einer im Bolzenträger 8 ausgebildeten Bohrung 24 aufgenommen und gehalten wird. Das Sonnenrad 14 wird mit seiner Außenverzahnung in die Außenverzahnungen der Planetenräder 12 eingefädelt und auf dem Bolzenträger 8 aufgelegt. Zur weiteren Montage werden der Planetenträger 6 einerseits und der Bolzenträger 8 andererseits mit ihren Abstandsblöcken 16, 18 axial aneinandergelegt, wobei das dem Planetenträger 6 zugeordnete Ende des Planetenradbolzens 20 jeweils in einer im Planetenträger 6 ausgebildeten Bohrung 22 aufgenommen und gehalten wird. In dem zwischen Planetenträger 6 und Bolzenträger 8 bestehenden Zwischenraum und konzentrisch zur Getriebelängsachse ist das Sonnenrad 14 angeordnet. Das Sonnenrad 14 kann beispielsweise auf der nicht dargestellten, durch eine im Bolzenträger 8 ausgebildete zentrale Öffnung 26 hindurch geführten gehäusefesten Hohlwelle drehfest angeordnet sein.

Der Lamellenträger 10 wird mit einem daran ausgebildeten Radialflansch 28 antriebsseitig an den Planetenträger 6 angelegt, wie insbesondere Fig. 2 zeigt. Um den Lamellenträger 10, den Planetenträger 6 und den Bolzenträger 8 miteinander zu verbinden, sind in deren jeweiligen radial äußeren Peripheriebereich zueinander fluchtende Bohrungen 30, 32, 34 ausgebildet, welche zugeordnete Schraubbolzen 36 aufnehmen, mittels derer diese Bauteile zusammengespannt werden.

Um diese Bauteile 6, 8, 10 vor dem Zusammenspannen zueinander auszurichten, sind im Planetenträger 6 einerseits und im Bolzenträger 8 zusätzlich Passbohrungen 38 bzw. 40 vorgesehen, welche zugeordnete Passstifte 42 aufnehmen. Die Passbohrungen 38, 40 für die Passstifte 42 sind radial und umfangsbezogen dicht unterhalb der Bohrungen 32 und 34 für die Schraubbolzen 36 angeordnet. Die Passbohrungen 38, 40 sind in vorteilhafter Weise unsymmetrisch angeordnet, wodurch gewährleistet wird, dass der Planetenträger 6 und der Bolzenträger 8 nur in einer Lageposition zueinander montierbar sind. Der durch die Passbohrungen 38 bzw. 40 und die Passstifte 42 beschriebene Passsitz ist vorzugsweise als Presssitz ausgeführt. Wie Fig. 1 weiter erkennen lässt, sind insbesondere die die genannten Bohrungen 32, 34. 38, 40 im Bereich der Abstandsblöcke 16 und 18 angeordnet, so dass die Spannkraft da aufgebracht wird, wo sie direkt aufgenommen werden kann.

Die beschriebene Konstruktion ermöglicht es demnach, mit einem einzigen gemeinsamen Satz Schraubbolzen 36 die wenigen die Getriebeanordnung bildenden Komponenten miteinander zu verbinden, wobei die Schraubbolzen 36 im peripheren Bereich dieser Komponenten auch für eine eventuelle Demontage leicht zugänglich sind.

Wie insbesondere aus Fig. 2 ersichtlich ist, trägt im dargestellten Ausführungsbeispiel der Bolzenträger 8 in seinem radial inneren Bereich eine zur Abtriebsseite hin ausgerichtete Nabe 44, die zum Antrieb eines weiteren Funktionselementes, beispielsweise einer Schmierölpumpe dienen kann. Da die Nabe 44 mit dem Bolzenträger 8 einstückig ausgebildet ist, wird die Anzahl der Bauteile gegenüber einer Ausgestaltung ohne Nabe vorteilhaft nicht erhöht.

### Bezugszeichenliste

- 2: Planetengetriebe
- 4: Nabe des Planetenträgers
- 6: Planetenträger
- 8: Bolzenträger
- 10: Äußerer Lamellenträger
- 12: Planetenräder
- 14: Sonnenrad
- 16: Abstandsblöcke
- 18: Abstandsblöcke
- 20: Planetenradbolzen
- 22: Bohrung
- 24: Bohrung
- 26: Zentrale Öffnung
- 28: Radialflansch
- 30: Bohrungen
- 32: Bohrungen
- 34: Bohrungen
- 36: Schraubbolzen
- 38: Passbohrungen
- 40: Passbohrungen
- 42: Passstifte
- 44: Nabe
- 46: Pfeil

## Patentansprüche

1. Getriebeanordnung, umfassend ein Planetengetriebe (2) mit einem jeweils ein Ende der Planetenradbolzen (20) haltenden Planetenträger (6), einem das jeweils andere Ende der Planetenradbolzen (20) haltenden Bolzenträger(8), und mit einem mit der aus Planetenträger (6) und Bolzenträger (8) gebildeten Baugruppe verbundenen Lamellenträger (10) für eine dem Planetengetriebe zugeordnete Schaltkupplung, **dadurch gekennzeichnet, dass** der Planetenträger (6), der Bolzenträger (8) und der Lamellenträger (10) jeweils ein eigenständiges Bauteil bilden, und dass diese über Schraubbolzen (36) oder dergleichen miteinander verbunden sind, welche jeweils in Peripheriebereichen dieser drei Bauteile (6, 8, 10) ausgebildete, zueinander fluchtende Bohrungen (30, 32, 34) durchsetzen.

2. Getriebeanordnung nach Anspruch 1, **dadurch gekennzeichnet, dass** der Lamellenträger (10) an dem Planetenträger (6) derart angeordnet ist, dass der Lamellenträger (10) eine Nabe (4) des Planetenträgers (6) konzentrisch umgibt.

3. Getriebeanordnung nach Anspruch 1 oder 2, **dadurch gekennzeichnet, dass** der Bolzenträger (8) in seinem radial inneren Bereich eine zu einer Abtriebsseite hin ausgerichtete Nabe (44) aufweist.

4. Getriebeanordnung nach Anspruch 3, **dadurch gekennzeichnet, dass** der Bolzenträger (8) und die Nabe (44) ein einstückiges Bauelement bilden.

5. Getriebeanordnung nach Anspruch 3 oder 4, **dadurch gekennzeichnet, dass** die Nabe (44) als Hohlnabe ausgebildet ist.

6. Getriebeanordnung nach einem der Ansprüche 1 bis 5, **dadurch gekennzeichnet, dass** der Planetenträger (6) und der Bolzenträger (8) durch jeweils zueinander fluchtende Passbohrungen (38, 40) durchsetzende Passstifte (42) zueinander ausgerichtet sind.

7. Getriebeanordnung nach einem der Ansprüche 1 bis 6, **dadurch gekennzeichnet, dass** der Planetenträger (6) und der Bolzenträger (8) jeweils scheibenförmig ausgebildet sind, und dass sie im radial äußeren Peripheriebereich über an ihren einander zugewandten Innenseiten über am Umfang verteilt angeordnete Abstandsblöcke (16, 18) aneinander anliegen, wobei die die Schraubbolzen (36) aufnehmenden Bohrungen (32, 34) die Abstandsblöcke (16, 18) axial durchsetzen.

8. Getriebeanordnung nach einem der Ansprüche 1 bis 7, **dadurch gekennzeichnet, dass** die Passbohrungen (38, 40) die Abstandsblöcke (16, 18) axial durchsetzen und radial unterhalb der Bohrungen (32, 34) für die Schraubbolzen (36) angeordnet sind.
